# EUROPÄISCHE PATENTSCHRIFT

(11) **EP 1 498 254 B1**
(45) Veröffentlichungstag und Bekanntmachung des Hinweises auf die Patenterteilung: **11.09.2013**
(21) Anmeldenummer: 03016061.8
(22) Anmeldetag: 15.07.2003
(51) Int. Cl.: B29C 47/22, B29C 47/06, B29C 47/70

(54) **Extrusionskopf**
Extrusion head
Tête d'extrusion

(43) Veröffentlichungstag der Anmeldung: 19.01.2005
(73) Patentinhaber: Kautex Maschinenbau GmbH, 53229 Bonn (DE)
(72) Erfinder: Balzer, Martin, 53757 Sankt Augustin (DE); Klause, René, 50674 Köln (DE)
(74) Vertreter: polypatent

(56) Entgegenhaltungen:
- EP-A- 0 876 895
- EP-A- 1 106 327
- DE-C- 19 535 749
- US-A- 4 395 221
- US-A- 5 667 818
- US-A- 5 702 664
- US-A- 5 779 959

## Beschreibung

Die Erfindung betrifft einen Extrusionskopf zur Herstellung von schlauch- oder rohrförmigen Vorformlingen aus thermoplastischem Kunststoff, als Radialangusskopf mit wenigstens einer zentralen Bohrung, wenigstens einer in der Bohrung angeordneten Pinole, die in der Bohrung einen Ringraum als Fließweg für das zu extrudierende Material begrenzt, mit wenigstens einem Ringverteilerkanal, der den Ringraum umgibt und über wenigstens einen Zufuhrkanal an einen Extruder anschließbar ist, wobei der Ringverteilerkanal über einen ringförmigen Zulaufspalt an den die Pinole umgebenden Ringraum angeschlossen ist und wobei der Querschnitt des Ringverteilerkanals von der Mündung des Zufuhrkanals in Strömungsrichtung betrachtet kontinuierlich abnimmt.

Ein derartiger Extrusionskopf ist beispielsweise aus der DE 195 35 749 C1 bekannt. Der in der DE 195 35 749 C1 beschriebene Extrusionskopf umfasst mehrere Verteiler, die als Einheiten aufgebaut sind und jeweils aus vier Verteilerscheiben bestehen, die mit Anlageflächen aneinander liegen, wobei die Anlageflächen Ebenen darstellen, auf denen die Längsachse senkrecht steht. Im Bereich der Anlageflächen der Verteilerscheiben ist ein Zufuhrkanal mit Durchlässen angeordnet, welche Verbindungen zu zwei Teilkanälen schaffen, die ebenfalls zwischen den Verteilerscheiben bzw. in den Trennebenen zwischen diesen angeordnet sind und jeweils in einen Abschnitt in der Ebene münden, in der die mittleren Verteilerscheiben aneinander liegen und dort einen ringförmigen Austrittsspalt bilden. Hierdurch wird ein modularer Aufbau und eine axial kurze Bauweise des Extrusionskopfs erzielt.

Bei Extrusionsköpfen der in der DE 195 35 749 C1 beschriebenen Art wird das jeweils dem die Pinole umgebenden Ringraum zuströmende plastifizierte Material in dem jeweiligen Ringverteilerkanal in zwei Teilströme aufgeteilt, die mehr oder weniger gleichmäßig durch einen ringförmigen Zulaufspalt in den die Pinole umgebenden Ringraum abströmen. Üblicherweise vereinigen die beiden Schmelzeströme sich an einer Zusammenflussstelle, die dem Schmelzezulauf in den Ringverteilerkanal diametral gegenüberliegt. An der Zusammenflussstelle bildet sich in dem Vorformling eine ausgezeichnete Nahtstelle aus, die an dem extrudierten Vorformling sichtbar ist. Eine solche Nahtstelle bildet bekanntermaßen eine Schwachstelle des fertigen Bauteils, was nicht wünschenswert ist. Um dem vorzubeugen, wird in der DE 195 35 749 C1 vorgeschlagen, den Schmelzezulauf zu den die Ringverteilerkanäle bildenden Teilkanälen jeweils zueinander versetzt anzuordnen. Hierdurch wird eine Überlappung der Teilströme so erreicht, dass die jeweilige Zusammenflussstelle der Schmelze von einem äußeren bzw. inneren ungeteilten Materialstrom überlappt wird.

Um eine möglichst günstige Schmelzeverteilung und Fließgeschwindigkeit in dem den Ringraum umgebenden Zulaufspalt zu erzielen, wird weiterhin in der DE 195 35 749 C1 vorgeschlagen, die jeweils den Ringverteilerkanal bildenden Teilkanalabschnitte diametral gegenüberliegend des Schmelzezulaufs im Querschnitt zu verjüngen. Hierdurch wird die Fließgeschwindigkeit stromabwärts des Fließweges vom Schmelzezulauf aus betrachtet erhöht, wobei dabei angestrebt wird, die Abströmgeschwindigkeit bzw. Fließgeschwindigkeit in dem Ringspalt über dessen gesamten Umfang etwa gleichzuhalten.

Diese Maßnahme ist allerdings mit dem Nachteil behaftet, dass durch den verringerten Fließkanalquerschnitt der Schmelzedruck in diesem Bereich des Ringverteilerkanals erhöht wird. Mit der Druckzunahme geht ein erhöhter Druckverbrauch einher, was wiederum eine ungünstige Volumenstromverteilung hervorruft. Eine ungleichmäßige Volumenstromverteilung resultiert in einer ungleichmäßigen Wanddickenverteilung der extrudierten Schicht. Dadurch dass der Extrusionskopf gemäß DE 195 35 749 C1 zur Extrusion mehrschichtiger Vorformlinge ausgebildet ist, wobei die einzelnen Schichten des Vorformlings so extrudiert werden, dass die Zusammenflussstellen der Schmelze von Schicht zu Schicht jeweils diametral gegenüberliegend angeordnet sind, ergibt sich, dass die Schichtdicke einer jeden Schicht des Vorformlings in Richtung der Zusammenflussstelle abnimmt, so dass die jeweils überlappende Schicht die tragende bzw. stabilisierende Funktion übernimmt, was an und für sich vorteilhaft ist. Dieser Extrusionskopf ist aber grundsätzlich nicht für die Herstellung einschichtiger Vorformlinge bzw. einlagiger Vorformlinge einsetzbar. Darüber hinaus ergibt sich, wie vorstehend bereits erwähnt, durch den erhöhten Druckverbrauch in dem sich verengenden Ringverteilerkanal eine ungleichmäßige Volumenstromverteilung bzw. Wanddickenverteilung. Bei dem Ringnutverteiler gemäß DE 195 35 749 C1 ist daher nicht sichergestellt, dass die beiden Komplementärschichten sich so ergänzen, dass ein Ring mit insgesamt gleichbleibender Wanddicke entsteht. Aus der EP 0 876 895 A1 ist ein Pinolenwerkzeug oder Dornhaltewerkzeug bekannt, bei dem ein Mitteldorn ringförmig von einem Strömungsteiler umgeben ist, der den Schmelzestrom in zwei ringförmige Teilströme aufteilt. Hieraus resultierende Verteilerkanäle erstrecken sich in Form von Herzkurven ausgehend von einer Schmelzzufuhr in beide Richtungen entlang der jeweiligen Oberfläche der Pinole oder der Verteilerhülse und treffen sich auf der jeweils der Zufuhr gegenüberliegenden Seite, so dass sich am fertigen Erzeugnis diametral gegenüberliegende Zusammenfließnähte eines äußeren und eines inneren Schlauchs ergeben.

Ein Extrusionskopf mit einem Ringnutverteiler ist beispielsweise auch aus der US 5,702,664 A bekannt, wobei dieser Extrusionskopf einen Ringverteilerkanal aufweist, dessen Querschnitt an der Mündung eines Zufuhrkanals in Strömungsrichtung betrachtet kontinuierlich abnimmt. Der Ringverteilerkanal ist so angeordnet, dass die aus diesem austretende Schmelze unmittelbar in den Ringraum des Extrusionskopfs abströmt.

Ein anderer Extrusionskopf als Radialangusskopf ist beispielsweise aus der US 4,395,221 bekannt.

Weitere Extrusionsköpfe sind beispielsweise aus den Dokumenten US 5,667,818 A sowie EP 1 106 327 A1 bekannt.

Ein Extrusionskopf nach Oberbegriff von Anspruch 1 ist beispielsweise aus der US 5,779,959 A bekannt, wobei dieser Extrusionskopf einen wendelförmigen Ringnutverteilerkanal aufweist, über welchen das schmelzeheiße Material in einem konischen Zulaufspalt abströmt, wobei die Weite des Spalts in Strömungsrichtung zunimmt.

Der Erfindung liegt daher die Aufgabe zugrunde, einen Extrusionskopf der eingangs genannten Art, der als Radialangusskopf mit einem sogenannten "Ringnutverteiler" ausgebildet ist, so weiterzubilden, dass mit besonders einfachen Mitteln eine besonders günstiges Fließverhalten der Schmelze erzielt werden kann, wobei der Extrusionskopf gemäß der Erfindung sich gleichermaßen zum Extrudierten von einschichtigen Vorformlingen eignen soll.

Die der Erfindung zugrunde liegende Aufgabe wird durch einen Extrusionskopf mit den eingangs genannten Markmalen gelöst, der sich dadurch auszeichnet, dass der Strömungswiderstand des Zulaufspalts in Strömungsrichtung des Materials von der Mündung des Zufuhrkanals aus gesehen kontinuierlich abnimmt.

Hierdurch wird dem in Strömungsrichtung in dem Ringverteilerkanal zunehmenden Druckverbrauch aufgrund dessen Querschnittsverjüngung Rechnung getragen. Die Erfindung lässt sich dahingehend zusammenfassen, dass entsprechend der Querschnittsverjüngung des Ringverteilerkanals eine Widerstandsverringerung an der betreffenden Stelle des Zulaufspalts erfolgt, so dass über den Umfang des Zulaufspalts sowohl eine gleichmäßige Abströmgeschwindigkeit als auch eine gleichmäßige Volumenstromverteilung erzielt werden. Der Zulaufspalt bildet dabei das dem Ringraum vorgeschaltete Drosselfeld, dessen Strömungswiderstand in Umfangsrichtung verschieden ist.

Diese Anordnung hat den Vorzug, dass sowohl einlagige als auch zweilagige koextrudierte Vorformlinge hergestellt werden können, bei denen fast keine ausgezeichnete Nahtstelle oder Zusammenflussstelle entsteht. Darüber hinaus ist bei Material- und/oder Farbwechseln ein besseres Abreinigungsverhalten des Extrusionskopfs gewährleistet.

Bevorzugt sind der Strömungswiderstand des Zulaufspalts und der Querschnitt des Ringverteilerkanals so aufeinander abgestimmt, dass die Summen der Strömungswiderstände jeweils des Ringverteilerkanals und des Zulaufspalts in jeder Winkellage in Umfangsrichtung des etwa tubusförmigen Schmelzestroms etwa gleich sind.

Gemäß der Erfindung nimmt die Länge des Zulaufspalts in Strömungsrichtung in Abhängigkeit zum Querschnitt des Ringverteilerkanals in Strömungsrichtung ab Durch Einflussnahme auf die Länge-des Zulaufspalts kann der Extrusionskopf weitestgehend material- und durchsatzunabhängig ausgelegt werden.

Zweckmäßigerweise nimmt die Länge des Zulaufspalts in Strömungsrichtung über einen Winkelumfang von je 180° von der Mündung des Zufuhrkanals ab, wenn nur ein Zufuhrkanal in den Ringverteilerkanal mündet.

Der erfindungsgemäße Extrusionskopf kann sowohl zur einschichtigen als auch zur mehrschichtigen Extrusion vorgesehen sein. In letzterem Fall sind wenigstens zwei übereinander angeordnete Ringverteilerkanäle zur Koextrusion eines mehrschichtigen Vorformlings vorgesehen, wobei ein erster Ringverteilerkanal über einen ersten umlaufenden Zulaufspalt und ein zweiter Ringverteilerkanal über einen zweiten umlaufenden Zulaufspalt in den Ringraum münden.

In diesem Fall ist es vorteilhaft, wenn auf den Umfang des Ringraums bezogen die Ringverteilerkanäle an diametral gegenüberliegenden Stellen an jeweils einen Zufuhrkanal angeschlossen sind.

Es ist zweckmäßig, wenn der Zufuhrkanal im Bereich des größten Querschnitts des Ringverteilerkanals in diesen mündet und der Ringverteilerkanal diametral gegenüberliegend des Zufuhrkanals seinen engsten Querschnitt aufweist.

Bei einer vorteilhaften Variante der Erfindung ist vorgesehen, dass der Zulaufspalt einen sich in einer zur Mittellängsachse der Bohrung senkrechten Ebene erstreckenden, zumindest teilweise umlaufenden ersten Abschnitt und einen in Bezug auf die Mittellängsachse der Bohrung konisch verlaufenden zweiten Abschnitt aufweist. Diese Ausbildung hat den Vorzug, dass die Auslegung der Länge des Zulaufspalts nicht unmittelbar Auswirkungen auf die Bautiefe des Ringverteilers hat.

Vorzugsweise nimmt die Länge des ersten Abschnitts von der Mündung des Zufuhrkanals ausgehend jeweils in Umfangsrichtung kontinuierlich ab.

Die Erfindung wird nachstehend anhand eines in den Zeichnungen dargestellten Ausführungsbeispiels erläutert.

Es zeigen:
- Figur 1: eine schematische Ansicht des erfindungsgemäßen Extrusionskopfs mit an diesem angeschlossenen Extrudern,

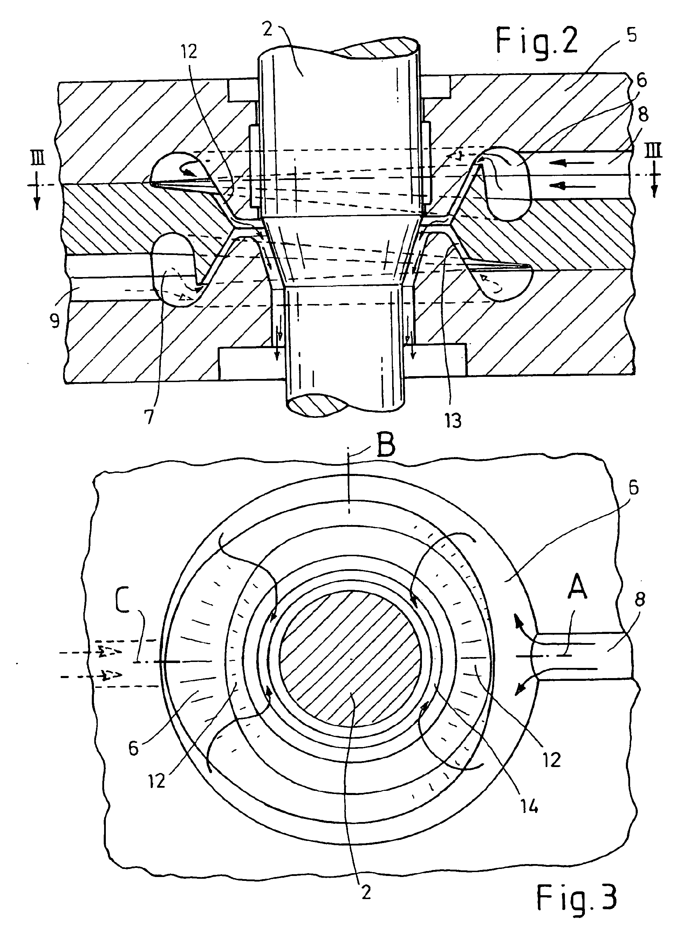

- Figur 2: eine vergrößerte Schnittansicht des Ringnutverteilerblocks des erfindungsgemäßen Extrusionskopfs,
- Figur 3: einen Schnitt entlang der Linien III-III in Figur 2,

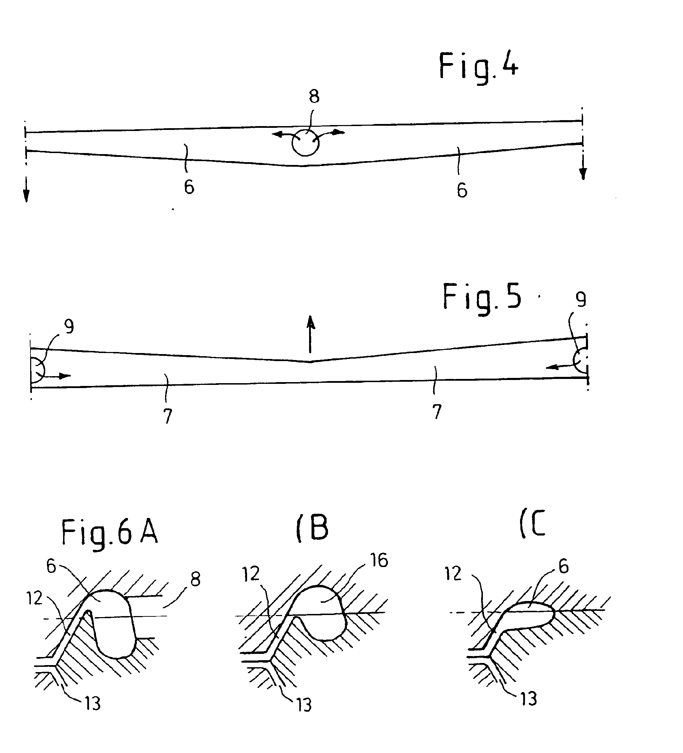

- Figur 4: eine abgewickelte Ansicht in den ersten Ringverteilerkanal in Richtung des in diesen mündenden Zufuhrkanals,
- Figur 5: eine Ansicht in den abgewickelten zweiten Ringverteilerkanal aus Sicht des in diesen mündenden Zufuhrkanals,
- Figur 6a: einen Schnitt entlang der Linie A in Figur 3,
- Figur 6b: einen Schnitt entlang der Linie B in Figur 3,
- Figur 6c: einen Schnitt entlang der Linie C in Figur 3,
- Figur 7: eine Abbildung des in dem Ringnutverteilerblock ausgebildeten Schmelzekörpers,
- Figur 8: einen Schnitt durch den in Figur 7 dargestellten Schmelzekörper entlang der Linie VIII-VIII,
- Figur 9: einen Schnitt durch den Schmelzekörper entlang der Linie IX-IX in Figur 7 und
- Figur 10: eine perspektivische Ansicht des Schmelzekörpers.

Der Extrusionskopf 1 gemäß der Erfindung umfasst eine Pinole 2, die in einem nicht dargestellten Gehäuse gelagert ist und eine zentrale Bohrung 3 eines Ringnutverteilerblocks 4 durchsetzt. Der Ringnutverteilerblock 4 ist aus drei Verteilerscheiben 5 zusammengesetzt, die jeweils in ihren Anlageflächen gegeneinander Nutkanäle aufweisen, die jeweils einen ersten Ringverteilerkanal 6 und einen zweiten Ringverteilerkanal 7 bilden. Die Ringverteilerkanäle 6 und 7 sind jeweils über einen ersten Zufuhrkanal 8 und einen zweiten Zufuhrkanal 9 an einen ersten Extruder 10 und einen zweiten Extruder 11 angeschlossen. Andererseits münden die Ringverteilerkanäle 6, 7 jeweils in einen ersten Zulaufspalt 12 und einen zweiten Zulaufspalt 13, welche sich in einen durch die Pinole 2 begrenzten Ringraum 14 öffnen. Über den Ringraum wird das von den Extrudern 10 und 11 plastifizierte Material einer Ringspaltdüse 15 zugeführt, aus der ein schlauchförmiger Vorformling 16 austritt. Der Extrusionskopf 1 nach den beschriebenen Ausführungsbeispielen dient zur Herstellung von Vorformlingen, die zur Verwendung beim Extrusionsblasformen vorgesehen sind. Der beispielhaft beschriebene Extrusionskopf 1 ist als Extrusionskopf für die kontinuierliche Extrusion vorgesehen, im Rahmen der Erfindung kann dieser jedoch auch als Extrusionskopf für die diskontinuierliche Extrusion vorgesehen sein. Beispielsweise kann das Extrudat aus den Extrudern 10, 11 jeweils in einen Zwischenspeicher gefördert werden. Alternativ kann der Extrusionskopf 1 als an sich bekannter Speicherkopf ausgebildet sein.

Um sicherzustellen, dass der durch die umlaufenden Zulaufspalte 12, 13 in den Ringraum 14 eintretende Schmelzestrom über den gesamten Umfang der Zulaufspalte 12, 13 eine annähernd gleiche Fließgeschwindigkeit aufweist, nimmt der Querschnitt des ersten Ringverteilerkanals 6 von der Mündung des ersten Zufuhrkanals 8 aus jeweils in Umfangsrichtung um 180° des Fließweges kontinuierlich ab. Der Querschnitt des zweiten Ringverteilerkanals 7 ist ebenso bemessen, wobei die Zufuhrkanäle 8, 9 jeweils an diametral gegenüberliegenden Stellen in den jeweiligen Ringverteilerkanal 6, 7 münden. Im Bereich der Mündung des betreffenden Zufuhrkanals 8, 9 in den Ringverteilerkanal 6, 7 besitzt dieser jeweils den größten Querschnitt. Diametral gegenüberliegend der Mündung des betreffenden Zufuhrkanals 8, 9 besitzt der Ringverteilerkanal 6, 7 jeweils den kleinsten Querschnitt. Hierdurch wird eine Erhöhung der Strömungsgeschwindigkeit der Schmelze in Strömungsrichtung erzielt und so der Tatsache Rechnung getragen, dass andernfalls im Bereich des Zulaufs aus dem jeweiligen Zufuhrkanal 8, 9 die höchste Strömungsgeschwindigkeit der Schmelze vorherrschen würde, wobei die Strömungsgeschwindigkeit dann mit fortschreitendem Fließweg abnehmen würde.

Um auch eine gleichmäßige Volumenstromverteilung und damit auch Wanddickenverteilung über den Umfang des betreffenden Zulaufspalts 12, 13 zu erzielen, nimmt, wie dies aus den Zeichnungen ersichtlich ist, die Länge des Zulaufspalts 12, 13 von der Mündung des Zufuhrkanals 8, 9 ausgehend jeweils in Umfangsrichtung um 180° kontinuierlich ab. Wie aus den Zeichnungen ersichtlich ist, sind der Ringverteilerkanal 6, 7 und der zugehörige Zulaufspalt 12, 13 über den gesamten Umfang miteinander verbunden, so dass der betreffende Zulaufspalt 12, 13 jeweils ein Drosselfeld bildet, welches an jeder Stelle seines Umfangs der Schmelze einen anderen Strömungswiderstand entgegensetzt. Die Länge des Zulaufspalts 12, 13 ist an jeder Stelle dessen Umfangs auf den zugehörigen Querschnitt des Ringverteilerkanals 6, 7 abgestimmt, und zwar derart, dass an jeder beliebigen Stelle des Umfangs des Ringverteilerkanals die Summe der in Umfangsrichtung wirkenden Komponente des Strömungswiderstandes und des Abströmwiderstandes in dem Zulaufspalt gleich ist. Auf diese Art und Weise wird eine gleichmäßige Volumenstromverteilung und eine gleichmäßige Strömungsgeschwindigkeit über den gesamten Umfang des Zulaufspalts 12, 13 und folglich auch über den Umfang des Ringraums 14 erzielt.

Diese Anordnung hat den Vorzug, dass sowohl einlagige als auch zweilagige koextrudierte Vorformlinge hergestellt werden können, bei denen fast keine ausgezeichnete Nahtstelle oder Zusammenflussstelle entsteht. Darüber hinaus ist bei Materialund/oder Farbwechseln ein besseres Abreinigungsverhalten des Extrusionskopfs gewährleistet. Wenn der Extrusionskopf 1 zur Herstellung mehrschichtiger Vorformlinge ausgebildet ist, können je nach Auslegung der Fließkanäle desselben zwei zueinander konzentrische Schichten oder zwei im Querschnitt sichelförmig ausgebildete Schichten extrudiert werden, die sich zu einem Vorformlingsschlauch mit über seinen gesamten Umfang konstanter Wandstärke ergänzen. In letzterem Fall nimmt die Schichtdicke einer jeden Schicht des Vorformlings in Richtung der Zusammenflussstelle des Materials ab, die Schichten überlappen sich so, dass die jeweils überlappende Schicht die tragende Funktion des Vorformlings übernimmt, wie dies im Stand der Technik bekannt ist.

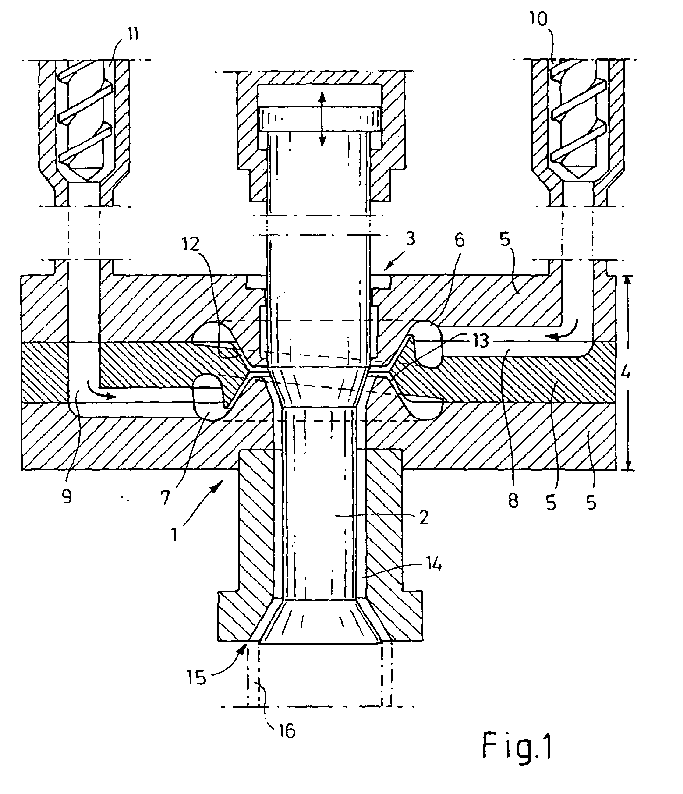

Wie insbesondere aus Figur 1 ersichtlich ist, ist die Länge der Zufuhrkanäle 8, 9 von dem Extruder 10, 11 zu dem jeweiligen Ringverteilerkanal 6, 7, in den diese radial einmünden, gleich, und zwar wird dies dadurch bewerkstelligt, dass die horizontale Länge des ersten Zufuhrkanals etwa um den Betrag des vertikalen Abstandes zwischen dem ersten Ringverteilerkanal 6 und dem zweiten Ringverteilerkanal 7 größer gewählt ist als die Länge des zweiten Zufuhrkanals 9.

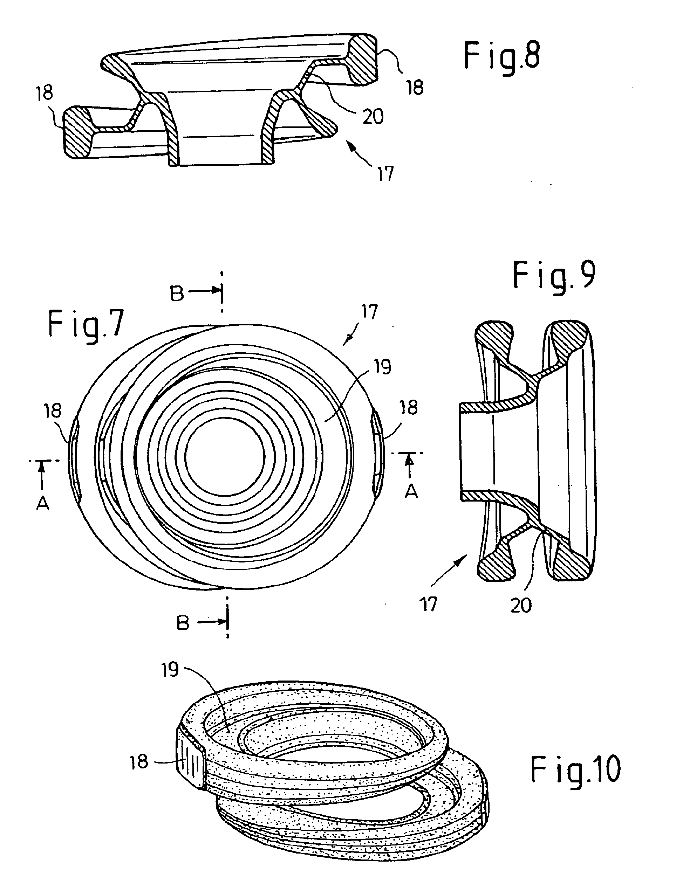

In den Figuren 7 bis 10 ist der in dem Ringverteilerblock 4 gemäß einem weiteren Ausführungsbeispiel nach der Erfindung entstehende Schmelzekörper 17 als Negativ der Ringverteilerkanäle 6, 7 und der Zulaufspalte 12, 13 dargestellt. Mit 18 sind die Angussstellen aus dem betreffenden Zufuhrkanal 8, 9 bezeichnet, an denen der Schmelzekörper 17 abgeschnitten ist. Die hieraus resultierende Ausbildung des Ringnutverteilerblocks 4 unterscheidet sich insoweit von derjenigen nach dem ersten Ausführungsbeispiel der Erfindung, als dass bei diesem Ausführungsbeispiel der erste und der zweite Zulaufspalt 12, 13 jeweils einen ersten etwa horizontalen Abschnitt 19 und einen zweiten etwa konischen Abschnitt 20 aufweisen. Horizontal heißt, dass der erste Abschnitt sich in einer senkrecht zur Mittellängsachse der Bohrung 3 verlaufenden Ebene erstreckt. Der erste Abschnitt 19 des betreffenden Zulaufspalts 12, 13 ist jeweils nur teilweise vollständig umlaufend ausgebildet. Die Länge des betreffenden Abschnitts 19 nimmt, wie dies aus den Abbildungen ohne weiteres ersichtlich ist, von der Angussstelle 18 aus betrachtet jeweils in Umfangsrichtung kontinuierlich ab und konvergiert gegen Null. In der in Figur 7 dargestellten Draufsicht betrachtet hat der erste Abschnitt 19 des ersten Zulaufspalts eine sichelförmige Ausbildung. Auf diese Art und Weise ist die Bautiefe des Ringnutverteilerblocks 4 in gewissen Grenzen unabhängig von der Länge des betreffenden Zulaufspalts 12, 13.

### Bezugszeichenliste

- 1: Extrusionskopf
- 2: Pinole
- 3: Bohrung
- 4: Ringnutverteilerblock
- 5: Verteilerscheiben
- 6: erster Ringverteilerkanal
- 7: zweiter Ringverteilerkanal
- 8: erster Zufuhrkanal
- 9: zweiter Zufuhrkanal
- 10: erster Extruder
- 11: zweiter Extruder
- 12: erster Zulaufspalt
- 13: zweiter Zulaufspalt
- 14: Ringraum
- 15: Ringspaltdüse
- 16: Vorformling
- 17: Schmelzekörper
- 18: Angussstellen
- 19: erster Abschnitt des Zulaufspalts
- 20: zweiter Abschnitt des Zulaufspalts

## Patentansprüche

1. Extrusionskopf (1) zur Herstellung von schlauch- oder rohrförmigen Vorformlingen aus thermoplastischem Kunststoff, als Radialangusskopf mit wenigstens einer zentralen Bohrung (3), wenigstens einer in der Bohrung angeordneten Pinole (2), die in der Bohrung einen Ringraum (14) als Fliessweg für das zu extrudierende Material begrenzt, mit wenigstens einem Ringverteilerkanal (6, 7), der den Ringraum umgibt und über
wenigstens einen Zufuhrkanal (8, 9) an einen Extruder (10, 11) anschliessbar ist, wobei der Ringverteilerkanal (6, 7) über einen ringförmigen Zulaufspalt (12, 13) an den die Pinole (2) umgebenden Ringraum (14) angeschlossen ist, wobei der Zulaufspalt ein dem Ringraum vorgeschaltetes Drosselfeld bildet, dessen Strömungswiderstand in Umfangsrichtung verschieden ist, wobei der Querschnitt des Ringverteilerkanals (6, 7) von der Mündung des Zufuhrkanals (8, 9) in Strömungsrichtung betrachtet kontinuierlich abnimmt und wobei der Strömungswiderstand des Zulaufspalts (12, 13) in Strömungsrichtung des Materials von der Mündung des Zufuhrkanals (8, 9) ausgehend kontinuierlich abnimmt, **dadurch gekennzeichnet, dass** die Länge des Zulaufspalts (12, 13) in Strömungsrichtung in Abhängigkeit vom Querschnitt des Ringverteilerkanals (6, 7) in Strömungsrichtung abnimmt.

2. Extrusionskopf nach Anspruch 1, **dadurch gekennzeichnet, dass** der Strömungswiderstand des Zulaufspalts (12, 13) und der Querschnitt des Ringverteilerkanals (8, 9) so aufeinander abgestimmt sind, dass die Summen der Strömungswiderstände jeweils des Ringverteilerkanals (6, 7) und des Zulaufspalts (12, 13) in jeder Winkellage in Umfangsrichtung etwa gleich gross sind.

3. Extrusionskopf nach Anspruch 1, **dadurch gekennzeichnet, dass** die Länge des Zulaufspalts (12, 13) in Strömungsrichtung über einen Winkelumfang
von je 180 DEG von der Mündung des Zufuhrkanals (8, 9) ausgehend abnimmt.

4. Extrusionskopf nach Anspruch 1, **dadurch gekennzeichnet, dass** die Weite des Zulaufspalts (12, 13) in Strömungsrichtung in Abhängigkeit vom Querschnitt des Ringverteilerkanals (6, 7) zunimmt.

5. Extrusionskopf nach einem der Ansprüche 1 bis 4, **dadurch gekennzeichnet, dass** wenigstens zwei übereinander angeordnete Ringverteilerkanäle (6, 7) zur Koextrusion eines mehrschichtigen Vorformlings vorgesehen sind, wobei ein erster Ringverteilerkanal (6) über einen ersten umlaufenden Zulaufspalt (12) und ein zweiter Ringverteilerkanal (7) über einen zweiten umlaufenden Zulaufspalt (13) in den Ringraum (14) münden.

6. Extrusionskopf nach Anspruch 5, **dadurch gekennzeichnet, dass** auf den Umfang des Ringraums (14) bezogen die Ringverteilerkanäle (6, 7) an diametral gegenüberliegenden Stellen an jeweils einen Zufuhrkanal (8, 9) angeschlossen sind.

7. Extrusionskopf nach einem der Ansprüche 1 bis 6, **dadurch gekennzeichnet, dass** der Zufuhrkanal (8, 9) im Bereich des grössten Querschnitts des Ringverteilerkanals (6, 7) in diesen mündet und dass der Ringverteilerkanal (6, 7) diametral gegenüberliegend der Mündung des Zufuhrkanals (8, 9) seinen engsten Querschnitt aufweist.

8. Extrusionskopf nach einem der Ansprüche 1 bis 7, **dadurch gekennzeichnet, dass** der Zulaufspalt (12, 13) einen in Bezug auf die Mittellängsachse der Bohrung (3) sich in einer senkrechten Ebene erstreckenden, zumindest teilweise umlaufenden ersten Abschnitt (19) und einen hierzu konisch verlaufenden zweiten Abschnitt (20) aufweist.

9. Extrusionskopf nach Anspruch 8, **dadurch gekennzeichnet, dass** die Länge des ersten Abschnitts (19) von der Mündung des Zufuhrkanals (8, 9)
ausgehend jeweils in Umfangsrichtung kontinuierlich abnimmt.

## Claims

1. Extrusion head (1) for producing tubular preforms from thermoplastic material, as a radial feed head having at least one central bore (3), at least one mandrel (2), which is arranged in the bore and delimits in the bore an annular space (14) as a flow path for the material to be extruded, having at least one annular distribution channel (6, 7), which surrounds the annular space and is connectable to an extruder (10, 11) via at least one feed channel (8, 9), the annular distribution channel (6, 7) being connected to the annular space (14) surrounding the mandrel (2) via an annular feed gap (12, 13), the feed gap forming a throttling area which is arranged upstream of the annular space and the flow resistance of which varies in the circumferential direction, the cross-section of the annular distribution channel (6, 7) decreasing continuously when viewed from the mouth of the feed channel (8, 9) in the flow direction, and the flow resistance of the feed gap (12, 13) decreasing continuously in the flow direction of the material starting from the mouth of the feed channel (8, 9), **characterised in that** the length of the feed gap (12, 13) in the flow direction decreases in dependence on the cross-section of the annular distribution channel (6, 7) in the flow direction.

2. Extrusion head according to Claim 1, **characterised in that** the flow resistance of the feed gap (12, 13) and the cross-section of the annular distribution channel (8, 9) are matched to one another such that the sums of the flow resistances in each case of the annular distribution channel (6, 7) and the feed gap (12, 13) are approximately equal in every angular position in the circumferential direction.

3. Extrusion head according to Claim 1, **characterised in that** the length of the feed gap (12, 13) in the flow direction decreases over an angular extent of in each case 180 degrees starting from the mouth of the feed channel (8, 9).

4. Extrusion head according to Claim 1, **characterised in that** the width of the feed gap (12, 13) in the flow direction increases in dependence on the cross-section of the annular distribution channel (6, 7).

5. Extrusion head according to one of Claims 1 to 4, **characterised in that** at least two annular distribution channels (6, 7) arranged above one another are provided for the coextrusion of a multilayer preform, a first annular distribution channel (6) opening into the annular space (14) via a first encircling feed gap (12) and a second annular distribution channel (7) opening into the annular space (14) via a second encircling feed gap (13).

6. Extrusion head according to Claim 5, **characterised in that**, in relation to the circumference of the annular space (14), the annular distribution channels (6, 7) are connected to in each case one feed channel (8, 9) at diametrically opposite places.

7. Extrusion head according to one of Claims 1 to 6, **characterised in that** the feed channel (8, 9) opens into the annular distribution channel (6, 7) in the region of the largest cross-section of the latter, and **in that** the annular distribution channel (6, 7) has its narrowest cross-section diametrically opposite the mouth of the feed channel (8, 9).

8. Extrusion head according to one of Claims 1 to 7, **characterised in that** the feed gap (12, 13) has an at least partially encircling first section (19) extending in a perpendicular plane in relation to the central longitudinal axis of the bore (3), and a second section (20) running conically with respect to the first section.

9. Extrusion head according to Claim 8, **characterised in that** the length of the first section (19) decreases continuously starting from the mouth of the feed channel (8, 9) in each case in the circumferential direction.

## Revendications

1. Tête d'extrusion (1) pour la fabrication de préformes tubulaires ou en forme de gaine, en une matière plastique thermoplastique, en tant que tête de soufflage radiale comportant au moins un trou central (3), au moins une torpille (2) disposée à l'intérieur du trou, torpille qui, dans le trou, délimite un espace annulaire (14) faisant office de chemin d'écoulement pour le matériau à extruder, comportant au moins un canal de répartition annulaire (6, 7), qui entoure l'espace annulaire et peut être raccordé à une extrudeuse (10, 11) par l'intermédiaire d'au moins un canal d'amenée (8, 9), le canal de répartition annulaire (6, 7) étant, par l'intermédiaire d'une fente d'alimentation annulaire (12, 13), raccordé à l'espace annulaire (14) entourant la torpille (2), la fente d'alimentation formant une zone d'étranglement en amont de l'espace annulaire, zone dont la résistance à l'écoulement varie dans la direction périphérique, la section transversale du canal de répartition annulaire (6, 7) diminuant en continu à partir de l'embouchure du canal d'amenée (8, 9) quand on regarde dans la direction de l'écoulement, et la résistance à l'écoulement de la fente d'alimentation (12, 13) diminuant en continu dans la direction de l'écoulement du matériau, en partant de l'embouchure du canal d'amenée (8, 9), **caractérisée en ce que** la longueur de la fente d'alimentation (12, 13) dans la direction de l'écoulement diminue en fonction de la section transversale du canal de répartition annulaire (6, 7) dans la direction de l'écoulement.

2. Tête d'extrusion selon la revendication 1, **caractérisée en ce que** la résistance à l'écoulement de la fente d'alimentation (12, 13) et la section transversale du canal de répartition annulaire (8, 9) sont adaptées l'une à l'autre de telle sorte que la somme de la résistance à l'écoulement de chaque canal de répartition annulaire (6, 7) et de la fente d'alimentation (12, 13) soit approximativement égale dans la direction périphérique, pour toute position angulaire.

3. Tête d'extrusion selon la revendication 1, **caractérisée en ce que** la longueur de la fente d'alimentation (12, 13) diminue dans la direction de l'écoulement, sur un angle qui dans chaque cas est de 180 degrés, en partant de l'embouchure du canal d'amenée (8, 9).

4. Tête d'extrusion selon la revendication 1, **caractérisée en ce que** la largeur de la fente d'alimentation (12, 13) augmente dans la direction de l'écoulement en fonction de la section transversale du canal de répartition annulaire (6, 7).

5. Tête d'extrusion selon l'une des revendications 1 à 4, **caractérisée en ce qu'**au moins deux canaux de répartition annulaires (6, 7) disposés l'un au-dessus de l'autre sont prévus pour la co-extrusion d'une préforme multicouche, un premier canal de répartition annulaire (6) par l'intermédiaire d'une première fente d'alimentation périphérique (12), et un deuxième canal de répartition annulaire (7) par l'intermédiaire d'une deuxième fente d'alimentation périphérique (13), débouchent dans l'espace annulaire (14).

6. Tête d'extrusion selon la revendication 5, **caractérisée en ce qu'**un canal d'amenée (8, 9) est raccordé, sur la périphérie de l'espace annulaire (14), en chacun des points diamétralement opposés par rapport aux canaux de répartition annulaires (6, 7).

7. Tête d'extrusion selon l'une des revendications 1, 6, **caractérisée en ce que** le canal d'amenée (8, 9), dans la zone de la section transversale la plus grande du canal de répartition annulaire (6, 7) débouche dans ce dernier, et que le canal de répartition annulaire (6, 7) présente sa section transversale la plus étroite en un point diamétralement opposé à l'embouchure du canal d'amenée (8, 9).

8. Tête d'extrusion selon l'une des revendications 1 à 7, **caractérisée en ce que** la fente d'alimentation (12, 13) comprend un premier segment (19), au moins partiellement périphérique, s'étendant dans un plan perpendiculaire à l'axe longitudinal central du trou (3), et un deuxième segment (20), courant coniquement par rapport au premier.

9. Tête d'extrusion selon la revendication 8, **caractérisé en ce que** la longueur du premier segment (19) diminue dans la direction périphérique, en partant de l'embouchure de chaque canal d'amenée (8, 9).
